(19) Europäisches Patentamt
European Patent Office
Office européen des brevets

(11) Numéro de publication: **0 107 582**
**A1**

(12) **DEMANDE DE BREVET EUROPEEN**

(21) Numéro de dépôt: **83402005.9**

(22) Date de dépôt: **14.10.83**

(51) Int. Cl.³: **B 01 J 20/02**, B 01 D 53/34, C 02 F 1/28

(30) Priorité: **26.10.82 FR 8217878**

(43) Date de publication de la demande: **02.05.84**
**Bulletin 84/18**

(84) Etats contractants désignés: **BE DE FR GB IT NL SE**

(71) Demandeur: **Société Française des Produits pour Catalyse "PRO-CATALYSE", 1-4, avenue de Bois Préau, F-92500 Rueil Malmaison (FR)**

(72) Inventeur: **Courty, Philippe, 91, rue Condorcet, F-78800 Houilles (FR)**
Inventeur: **Pelosi, Jacques, Château des Isnards, F-30340 Salindres (FR)**
Inventeur: **Roussel, Michel, 45, avenue Guillebaud, F-92160 Antony (FR)**

(74) Mandataire: **Savina, Jacques et al, RHONE-POULENC RECHERCHES Service Brevets Chimie et Polymères 25, Quai Paul Doumer, F-92408 Courbevoie Cedex (FR)**

(54) **Nouvelles masses d'absorption pour l'élimination du mercure comportant un support sur lequel est déposé du soufre.**

(57) Les nouvelles masses d'absorption pour l'élimination du mercure présent dans un gaz ou un liquide sont caractérisées en ce qu'elles sont constituées de soufre déposé sur un support choisi parmi l'alumine, la silice, l'argile et en ce qu'elles présentent une répartition des volumes poreux suivant la taille des pores telle que:

| Øen A | <100 | 100-1000 | 1000-5000 | 5000-10000 | >10000 |
|---|---|---|---|---|---|
| √ $cm^3/g$ | 0-0,10 | 0,20-1,2 | 0-0,30 | 0-0,20 | 0-0,015 |

Ø représentant le diamètre des pores et √ le volume des pores ayant un diamètre compris dans les limites indiquées.

Les masses d'absorption selon l'invention présentent les caractéristiques suivantes:
— une densité de remplissage tassé (DRT) comprise entre 0,45 et 0,90 $g/cm^3$,
— un volume poreux (VPT) compris entre 0,25 et 1,2 $cm^3/g$ et plus particulièrement entre 0,7 et 1,2 $cm^3/g$,
— une surface spécifique (SBE) comprise entre 50 et 500 $m^2/g$,
— une résistance à l'écrasement (EGG) comprise entre 1 et 20 kg,
— une résistance à l'attrition (RA) supérieure à 85%.

EP 0 107 582 A1

# NOUVELLES MASSES D'ABSORPTION POUR L'ELIMINATION DU MERCURE COMPORTANT UN SUPPORT SUR LEQUEL EST DEPOSE DU SOUFRE

La présente invention concerne de nouvelles masses d'absorption pour l'élimination du mercure présent dans un gaz ou un liquide et comportant un support sur lequel est déposé du soufre. Elle concerne également le procédé de fabrication desdites masses d'absorption.

Les gaz naturels renferment, selon leur origine, des teneurs variables de mercure. Ces teneurs sont généralement de l'ordre de 0,1 à 50 microgrammes de mercure par $m^3$ de gaz. Du fait de la toxicité du mercure et des risques de pollution qui s'ensuivent, il s'avère nécessaire d'extraire le mercure de ces gaz naturels et, plus généralement, des nombreuses atmosphères qui peuvent contenir des traces de mercure.

Il a déjà été proposé de nombreuses masses d'absorption pour éliminer le mercure. Ainsi la demande de brevet français n° 2 335 257 décrit un procédé d'élimination du mercure dans un gaz ou un liquide à l'aide d'une masse solide d'absorption renfermant

a) un support solide choisi parmi le groupe formé par la silice, l'alumine, la silice-alumine, les silicates, les aluminates et les silicoaluminates et,

b) du cuivre à l'état de sulfure.

De telles masses, bien que satisfaisantes, s'avèrent être d'une préparation complexe nécessitant de nombreuses étapes.

La demanderesse a mis au point des masses d'absorption pour l'élimination du mercure présent dans un gaz ou un liquide qui obvient aux inconvénients précités et qui présentent notamment l'avantage de présenter une capacité d'absorption du mercure nettement améliorée et d'être très simple à fabriquer.

La présente invention concerne en effet de nouvelles masses d'absorption pour l'élimination du mercure présent dans un gaz ou un liquide constituées de soufre déposé sur un support choisi parmi l'alumine, la silice, l'argile et caractérisées en ce qu'elles présentent une répartition des volumes poreux suivant la taille des pores telle que :

| Ø en Å | < 100 | 100 - 1000 | 1000-5000 | 5000-10000 | > 10000 |
|---|---|---|---|---|---|
| V $cm^3/g$ | 0 - 0,10 | 0,20 - 1,2 | 0 - 0,30 | 0 - 0,20 | 0 - 0,15 |

Ø représentant le diamètre des pores et V le volume des pores ayant un diamètre compris dans les limites indiquées.

Les masses d'absorption selon l'invention présentent en outre de préférence les caractéristiques suivantes :

- une densité de remplissage tassé (DRT)comprise entre 0,45 et 0,90g/$cm^3$,
- un volume poreux (VPT) compris entre 0,25 et 1,2$cm^3$/g et plus particulièrement entre 0,7 et 1,2$cm^3$/g,
- une surface spécifique (SBE) comprise entre 50 et 500 $m^2$/g,
- une résistance à l'écrasement (EGG) comprise entre 1 et 20kg,
- une résistance à l'attrition (RA) supérieure à 85%.

Le soufre déposé sur le support se présente sous forme de particule tel que le diamètre moyen de ces particules est inférieur à 20 microns et de préférence compris entre 0,01 et 10 microns. La présence de ces particules de soufre liée à la répartition poreuse du support s'avère particulièrement favorable à l'élimination du mercure présent dans les gaz ou les liquides.

La quantité de soufre dans la masse d'absorption est comprise entre 1 et 60% et de préférence 10 et 60% en poids par rapport au poids du support.

La présente invention concerne également le procédé de fabrication de ces nouvelles masses d'absorption ; ce procédé est caractérisé en ce qu'il comporte les étapes suivantes :

a) on imprègne un support choisi parmi l'alumine, la silice, l'argile présentant une répartition des volumes poreux suivant la taille des pores telle que :

| Ø en Å | < 100 | 100 - 1000 | 1000-5000 | 5000-10000 | > 10000 |
|---|---|---|---|---|---|
| $\sqrt{}$ $cm^3/g$ | 0 - 0,10 | 0,20 - 1,2 | 0 - 0,30 | 0 - 0,20 | 0 - 0,15 |

avec une solution organique de soufre et/ou une solution aqueuse d'un composé du soufre décomposable en soufre à une température inférieure à 150°C ou avec du soufre à l'état de vapeur, que l'on condense sur le support ;

b) On sèche la masse obtenue à une température inférieure à 150°C et de préférence comprise entre 80 et 120°C.

Le support mis en oeuvre selon l'invention est choisi parmi l'alumine, la silice, l'argile ; il peut être sous forme de billes, pastilles, cylindres ou agglomérés de diverses formes.

Selon l'invention on utilise de préférence des agglomérés d'alumine. Ces agglomérés d'alumine sont de préférence préparés selon le procédé décrit dans la demande française n° 2 496 631. Selon ce procédé on prépare des agglomérés d'alumine selon les étapes suivantes :

a) On traite des agglomérés d'alumine active dans un milieu aqueux constitué d'un mélange d'au moins un acide permettant de dissoudre au moins une partie de l'alumine des agglomérés et d'au moins un composé apportant un anion capable de se combiner avec les ions aluminium en solution.

b) On soumet simultanément ou subséquemment les agglomérés ainsi traités à un traitement à une température comprise entre environ 80°C et environ 250°C pendant une période comprise entre environ quelques minutes et environ 36h.

c) On sèche éventuellement les agglomérés et on les soumet à une activation thermique à une température comprise entre environ 500°C et environ 1100°C.

Selon ce procédé l'acide dissout au moins 0,5% et au plus 15% en poids d'alumine des agglomérés.

Selon ce procédé l'acide est choisi parmi les acides forts ou les acides faibles, sa concentration dans le milieu aqueux de

traitement est inférieure à 20% en poids et de préférence comprise entre 1% et 15%.

Selon ce procédé l'acide est choisi parmi le groupe comportant : l'acide nitrique, l'acide chlorhydrique, l'acide perchlorique, l'acide sulfurique.

Selon ce procédé le composé apportant un anion $A^{-n}$ forme avec les ions aluminium $Al^{3+}$ en solution des produits dans lesquels le rapport atomique $n \frac{A}{Al} \leqslant 3$ ; la concentration de ce composé dans le milieu aqueux de traitement est inférieure à 50% en poids et de préférence comprise entre 3% et 30%.

Selon ce procédé les composés comportent les anions choisis parmi le groupe constitué par les anions nitrate, chlorure, sulfate, perchlorate, chloroacétate, dichloracétate, trichloracétate, bromoacétate, dibromoacétate et les anions de formule générale

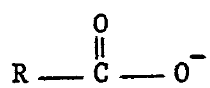

dans laquelle R représente un radical pris dans le groupe comprenant H, $CH_3$, $C_2H_5$, $CH_3CH_2CH_2$, $(CH_3)_2CH$.

Selon ce procédé, les composés sont choisis parmi le groupe comportant les acides minéraux ou organiques, les anhydrides, les sels minéraux ou organiques, les esters.

Selon ce procédé, les composés sont choisis parmi le groupe constitué par les sels de sodium, potassium, ammonium, aluminium, magnésium, calcium, terres rares.

Selon ce procédé, le traitement b) est effectué à une température comprise entre 120 et 220°C pendant une période de temps comprise entre 15 minutes et 18 heures.

Les supports préférés d'alumine selon l'invention présentent une densité de remplissage tassé (DRT) comprise entre 0,36 et 0,75g/$cm^3$. Ils présentent un volume poreux (VPT) compris entre 0,35 et 1,5$cm^3$/g et plus particulièrement entre 0,9 et 1,5$cm^3$/g. Ils présentent une surface spécifique comprise entre 80 et 300$m^2$/g, une

résistance à l'écrasement EGG comprise entre 1 et 20kg et une résistance à l'attrition (RA) supérieure à 98%.

Selon le procédé de fabrication des masses d'absorption de l'invention, on imprègne le support avec une solution organique de soufre ou une solution aqueuse d'un composé du soufre décomposable en soufre à une température inférieure à 150°C.

Comme solution organique de soufre, on peut notamment mettre en oeuvre des particules de soufre à l'état natif ou en fleur dont le diamètre moyen est inférieur à 20 microns et de préférence compris entre 0,01 et 10 microns en solution (ou suspension) dans un composé organique dont la température d'ébullition est inférieure à 150°C comme par exemple : le toluène, le benzène, l'alcool méthylique, l'acétone, le sulfure de carbone.

On imprègne le support avec ladite solution organique, la quantité totale de soufre étant introduite en une ou éventuellement plusieurs opérations d'imprégnation avec séchage intermédiaire à une température inférieure à 150°C. Il est nécessaire d'opérer cette imprégnation en évitant la cristallisation prématurée du soufre sur le support du fait notamment d'une trop grande différence de température entre le support et la solution organique d'imprégnation. Pour atteindre cet objectif, il peut s'avérer avantageux de chauffer préalablement le support à la même température que la solution d'imprégnation.

On opère ensuite le séchage de la masse obtenue à une température inférieure à 150°C et de préférence comprise entre 80 et 120°C de telle façon que le composé organique se volatilise et laisse le soufre à l'état libre non fondu réparti dans le support. Ce séchage est opéré de préférence en atmosphère contrôlée et plus particulièrement sous gaz inerte ou sous balayage d'air de façon à éviter l'oxydation du soufre au contact de l'oxygène.

Selon le procédé de l'invention, on peut également opérer l'imprégnation du support avec une solution aqueuse d'un composé du soufre décomposable en soufre à une température inférieure à 150°C. On opère de préférence avec une solution aqueuse de sulfure ou de polysulfure d'ammonium, la concentration de la solution

aqueuse de sulfure ou polysulfure d'ammonium pouvant varier dans de larges limites et étant comprise de préférence entre 1 et 60g/l. Selon l'invention, on peut également mettre en oeuvre des solutions de sulfures ou polysulfures alcalins.

Cette imprégnation est également réalisée en une ou plusieurs opérations avec éventuellement sèchage intermédiaire de façon à introduire la quantité de soufre désirée dans le support.

Selon le procédé de l'invention, on peut également opérer l'imprégnation du support avec du soufre par condensation de soufre à l'état de vapeur sur celui-ci. Le soufre à l'état de vapeur peut être, par exemple, véhiculé par un courant gazeux inerte ou être produit par réaction chimique, par exemple entre l'hydrogène sulfuré et l'anhydride sulfureux (réaction de Claus).

On opère ensuite le sèchage de la masse ainsi obtenue à une température inférieure à 150°C et de préférence comprise entre 80 et 120°C sous atmosphère contrôlée de façon à opérer d'une part la décomposition du sulfure d'ammonium sans fusion du soufre produit et d'autre part à éviter l'oxydation du soufre ainsi formé.

Les masses d'absorption de l'invention ainsi obtenues présentent une stabilité très améliorée, une excellente résistance mécanique aussi bien à l'attrition qu'à l'écrasement, une bonne tenue à l'eau : elles ne se désagrègent ou ne se délitent pas à son contact. De plus, les masses de l'invention présentent une capacité d'absorption du mercure considérablement améliorée, généralement cette capacité est supérieure à 10% et peut atteindre 200% exprimée en poids de mercure absorbé par rapport au poids de la masse initiale.

Le domaine de température dans lesquelles ces masses peuvent être utilisées est habituellement compris entre - 50°C et 150°C ; les températures optimales peuvent différer selon les gaz à traiter et leur composition de façon à éviter une condensation trop importante de l'eau ou d'autres produits condensables.

Cette captation peut être réalisée à pression atmosphèrique ou sous une pression plus basse ou plus élevée, la pression totale pouvant atteindre par exemple 200 bars.

La V.V.H. (volume de charge exprimé à température et pression normale par volume de masse de captation et par heure) pourra varier par exemple de 50 à 50 000 mais on opèrera de préférence à une V.V.H. comprise entre 200 et 20 000, selon la pression à laquelle on opèrera et selon la teneur en mercure des gaz à traiter et le taux d'épuration que l'on voudra réaliser.

Les gaz traités peuvent renfermer par exemple de 10nanogrammes à 5 grammes ou plus de mercure par mètre cube.

Le dispositif d'élimination du mercure peut être constitué d'un seul réacteur ou d'au moins deux réacteurs en parallèle mais on utilisera préférentiellement au moins deux réacteurs en série.

L'efficacité des masses de piègeage du mercure est évaluée au moyen de deux appareillages, l'un fonctionnant à la pression atmosphérique, l'autre à 30 bars.

Une application des masses de piègeage du mercure selon l'invention est, par exemple, constituée par la purification de l'hydrogène dégagé lors d'électrolyse mettant en oeuvre des cellules à cathode de mercure.

L'appareillage consiste en un tube métallique dont l'inactivité pour la fixation du mercure a été contrôlée, contenant 30ml de la masse de captation à tester et dans lequel on fait passer un débit règlable de gaz.

La détermination de la teneur en mercure est faite par adsorption atomique par exemple au moyen d'un analyseur à mercure COLEMAN basé sur la méthode de HATCH et OTT décrite dans Analytical Chemistry de décembre 1968.

Les essais en phase liquide sont faits à température ambiante avec du pentane contenant 4µg de mercure par litre, injecté à l'aide d'une pompe doseuse.

Les exemples suivants sont destinés à illustrer l'invention et ne doivent en aucune manière en limiter la portée aux modes de réalisation spécifiques qui y sont décrits.

Dans ces exemples :

- la densité de remplissage tassé (DRT) est mesurée de la façon suivante : on introduit un poids donné de support ou de masse

dans une éprouvette graduée pour contenir les agglomérés dans un volume donné. On fait ensuite vibrer l'éprouvette jusqu'à la fin de tout tassement et jusqu'à l'obtention d'un volume constant. On calcule ensuite le poids d'aggloméré qui occupe un volume unité.

- le volume poreux total (VPT) du support est mesuré de la façon suivante : on détermine la valeur de la densité de grain et de la densité absolue ; les densités de grain (Dg) et absolue (Da) sont mesurées par la méthode de picnométrie respectivement au mercure et à l'hélium ; le VPT est donné par la formule

$$VPT = \frac{1}{Dg} - \frac{1}{Da}$$

- La répartition des volumes poreux suivant la taille des pores (REP) du support est déterminée par la technique de la pénétration du mercure dans laquelle on applique la loi de Kelvin qui donne la relation entre la pression, le diamètre du plus petit pore dans lequel le mercure pénètre à ladite pression, l'angle de mouillage et la tension superficielle, selon la formule :

$$\varnothing = 4t\frac{\cos\theta}{p}$$ dans laquelle

$\varnothing$ représente le diamètre du pore

t la tension superficielle

l'angle de contact

p la pression.

- La surface spécifique (SBE) est mesurée par la méthode B.E.T.

- La solidité mécanique est mesurée par la méthode d'écrasement grain à grain (EGG). Elle consiste à mesurer la forme de compression maximale que peut supporter un granulé de support ou de masse avant sa rupture, lorsque le produit est placé entre deux plans se déplaçant à la vitesse constante de 5cm/mn. Dans le cas particulier de sphères, la force sera exprimée en kilogrammes.

- La résistance à l'attrition (RA) est mesurée par le pourcentage de produit non usé par frottement selon la méthode suivante : on introduit un volume donné ($60cm^3$) de support ou de masse dans un erlenmeyer renversé de construction particulière qui est raccordé à un orifice d'entrée métallique. Sur le fond de l'erlenmeyer on place un grand orifice de sortie (2,54cm) recouvert

d'un tamis de 1,168mm d'ouverture. On envoie par l'orifice d'ouverture un fort courant d'azote sec qui a deux fonctions, d'une part de faire circuler les produits les uns contre les autres, ce qui entraîne leur usure par frottement, d'autre part de provoquer le choc des agglomérés contre l'erlenmeyer, ce qui entraîne leur dégradation selon l'intensité du choc. Le produit est testé pendant 5 minutes et on pèse le poids des agglomérés restants. La diminution de poids après l'essai exprimé en % de la charge initiale représente la résistance à l'attrition RA.

EXEMPLE

1) PREPARATION DES MASSES SELON L'INVENTION

MASSE A

On opère une première imprégnation de 1kg d'un support de billes d'alumines de diamètre compris entre 2,4 et 4mm présentant les caractéristiques suivantes :

- DRT : 0,441g/$cm^3$
- VPT : 1,09$cm^3$/g
- REP :

| Ø en Å | < 100 | 100 - 1000 | 1000-5000 | 5000-10000 | > 10000 |
|---|---|---|---|---|---|
| V $cm^3$/g | 0,01 | 0,62 | 0,20 | 0,13 | 0,13 |

- SBE : 111 $m^2$/g
- EGG : 3 kg
- RA : 98%

avec 1,1 litre d'une solution aqueuse de sulfure d'ammonium à 10% compté en $H_2S$. On opère un séchage intermédiaire à l'étuve 16 heures à 120°C.

On opère une deuxième imprégnation du produit obtenu avec 1,1 litre de la solution aqueuse de sulfure d'ammonium précédente. On sèche 16 heures à 120°C.

La masse A obtenue présente les caractéristiques suivantes :

- S% en poids : 15

- DRT : 0,558g/$cm^3$
- VPT : 0,80$cm^3$/g
- REP :

| Ø en Å | < 100 | 100 - 1000 | 1000-5000 | 5000-10000 | > 10000 |
|---|---|---|---|---|---|
| V $cm^3$/g | 0,01 | 0,45 | 0,15 | 0,10 | 0,09 |

- SBE : 86$m^2$/g
- EGG : 4,5
- RA : 97%

MASSE B

On opère une première imprégnation de 800g d'un support de billes d'alumine identique à celui mis en oeuvre pour la préparation de la masse A décrite ci-dessus avec 0,872 litre d'une solution aqueuse de sulfure d'ammonium à 20% compté en $H_2S$. On opère un sèchage intermédiaire à l'étuve 16 heures à 120°C.

On opère une deuxième imprégnation du produit obtenu avec 0,872 litre de la solution aqueuse de sulfure d'ammonium précédente. On sèche 16 heures à 120°C.

La masse B obtenue présente les caractéristiques suivantes :

- S% en poids : 27
- DRT : 0,59g/$cm^3$
- VPT : 0,64$cm^3$/g
- REP :

| Ø en Å | < 100 | 100 - 1000 | 1000-5000 | 5000-10000 | > 10000 |
|---|---|---|---|---|---|
| V $cm^3$/g | 0,01 | 0,42 | 0,06 | 0,05 | 0,10 |

- SBE : 62$m^2$/g
- EGG : 3,6kg
- RA : 96,2%

MASSE C

On opère l'imprégnation de 1000g d'un support de billes d'alumine identique à celui mis en oeuvre pour la préparation de la masse A décrite ci-dessus avec une solution organique de soufre comportant 200g de soufre micronisé dont les particules ont un diamètre moyen de 2 microns solubilisé dans 1,10litre de toluène à 90°C. L'imprégnation est réalisée en une seule fois à chaud sur le support préalablement chauffé à 90°C.

On opère ensuite le sèchage à l'étuve du produit obtenu à 120°C pendant 16heures.

La masse C obtenue présente les caractéristiques suivantes :

- S% en poids : 15
- DRT : 0,564g/$cm^3$
- VPT : 0,77$cm^3$/g
- REP :

| Ø en Å | < 100 | 100 - 1000 | 1000-5000 | 5000-10000 | > 10000 |
|---|---|---|---|---|---|
| $\gamma$ $cm^3$/g | 0,02 | 0,55 | 0,08 | 0,06 | 0,06 |

- SBE : 82$m^2$/g
- EGG : 4,3kg
- RA : 86%

2) TESTS

L'efficacité des masses préparées est évaluée en faisant passer un gaz naturel contenant du mercure sur 20$cm^3$ de masse de piègeage contenu dans un tube métallique revêtu de 2cm de diamètre dont l'inactivité pour la captation de mercure a été vérifiée.

Le gaz naturel utilisé a une composition en % volume de 84% de méthane et de 0,3% d'hydrocarbures à 5 atomes de carbone ou plus.

L'efficacité initiale des masses est évaluée à température ambiante et à diverses VVH avec un gaz naturel ayant une teneur en mercure de 10mg/$m^3$ pour les essais à pression atmosphérique et de 1mg/$m^3$ pour les essais sous 30 bars.

L'efficacité est définie pour le rapport :

$$\frac{\text{teneur en Hg à l'entrée} - \text{teneur en Hg à la sortie}}{\text{teneur en mercure à l'entrée}} \times 100$$

Les résultats obtenus sont donnés dans le tableau suivant :

| MASSE | VVH | P | TAUX D'EPURATION |
|---|---|---|---|
| A | 500 | 1 | > 99,9 |
| | 1000 | 1 | 99,9 |
| | 2000 | 1 | 99,8 |
| B | 500 | 1 | > 99,9 |
| | 1000 | 1 | 99,9 |
| | 2000 | 1 | 99,9 |
| C | 500 | 1 | 99,9 |
| | 1000 | 1 | 99,8 |
| | 2000 | 1 | 99,7 |

Essais sous pression de 30 bars :

| MASSE | VVH | P | TAUX D'EPURATION |
|---|---|---|---|
| A | 10000 | 30 | 99,9 |
| | 15000 | 30 | 99,9 |
| B | 10000 | 30 | 99,9 |
| | 15000 | 30 | 99,8 |
| C | 10000 | 30 | 99,9 |
| | 15000 | 30 | 99,9 |

Dans le but d'évaluer la capacité d'absorption de ces masses,

on fait passer un volume de gaz sur ces masses à 30 bars tel qu'à VVH 5000, la quantité de mercure fixée est de 8% du poids total de ces masses.

L'on fait ensuite un test d'activité pour évaluer l'efficacité de ces masses dans les mêmes conditions que celles définies pour l'essai pour 30 bars de pression.

| MASSE | VVH | P | TAUX D'EPURATION |
|---|---|---|---|
| A | 10000 | 30 | 99,9 |
| | 15000 | 30 | 99,9 |
| B | 10000 | 30 | 99,9 |
| | 15000 | 30 | 99,8 |
| C | 10000 | 30 | 99,9 |
| | 15000 | 30 | 99,8 |

REVENDICATIONS

1) Masses d'absorption pour l'élimination du mercure présent dans un gaz ou un liquide constituées de soufre déposé sur un support choisi parmi l'alumine, la silice, l'argile caractérisées en ce qu'elles présentent une répartition des volumes poreux suivant la taille des pores telle que :

| Ø en Å | < 100 | 100 - 1000 | 1000-5000 | 5000-10000 | > 10000 |
|---|---|---|---|---|---|
| $V$ $cm^3/g$ | 0 - 0,10 | 0,20 - 1,2 | 0 - 0,30 | 0 - 0,20 | 0 - 0,15 |

Ø représentant le diamètre des pores et $V$ le volume des pores ayant un diamètre compris dans les limites indiquées.

2) Masses d'absorption selon la revendication 1 caractérisées en ce qu'elles présentent les caractéristiques suivantes :

- une densité de remplissage tassé (DRT)comprise entre 0,45 et $0,90 g/cm^3$,
- un volume poreux (VPT) compris entre 0,25 et $1,2 cm^3/g$ et plus particulièrement entre 0,7 et $1,2 cm^3/g$,
- une surface spécifique (SBE) comprise entre 50 et 500 $m^2/g$,
- une résistance à l'écrasement (EGG) comprise entre 1 et 20kg,
- une résistance à l'attrition (RA) supérieure à 85%.

3) Masses d'absorption selon la revendication 1 caractérisées en ce que le soufre déposé sur le support se présente sous forme de particules telles que le diamètre moyen de ces particules est inférieur à 20 microns et de préférence compris entre 0,01 et 10 microns et en ce que la quantité de soufre dans la masse d'absorption est comprise entre 1 et 60% et de préférence 10 et 60% en poids par rapport au poids du support.

4) Procédé de fabrication des masses d'absorption selon l'une quelconque des revendications précédentes caractérisé en ce qu'il comporte les étapes suivantes :

a) on imprègne un support choisi parmi l'alumine, la silice, l'argile présentant une répartition des volumes poreux suivant la taille des pores telle que :

| Ø en Å | < 100 | 100 - 1000 | 1000-5000 | 5000-10000 | > 10000 |
|---|---|---|---|---|---|
| V cm³/g | 0 - 0,10 | 0,20 - 1,2 | 0 - 0,30 | 0 - 0,20 | 0 - 0,15 |

avec une solution organique de soufre et/ou une solution aqueuse d'un composé du soufre décomposable en soufre à une température inférieure à 150°C ou avec du soufre à l'état de vapeur que l'on condense sur le support ;

b) On sèche la masse obtenue à une température inférieure à 150°C et de préférence comprise entre 80 et 120°C.

5) Procédé selon la revendication 4 caractérisé en ce que, comme solution organique de soufre, on met en oeuvre des particules de soufre à l'état natif ou en fleur dont le diamètre moyen est inférieur à 20 microns et de préférence compris entre 0,01 et 10 microns en solution ou suspension dans un composé organique dont la température d'ébullition est inférieure à 150°C comme : le toluène, le benzène, l'alcool méthylique, l'acétone, le sulfure de carbone.

6) Procédé selon la revendication 4 caractérisé en ce que la solution aqueuse d'un composé du soufre décomposable en soufre à une température inférieure à 150°C est choisie parmi les solutions aqueuses de sulfure ou de polysulfure d'ammonium et les solutions aqueuses de sulfure ou de polysulfures alcalins.

0107582

Office européen des brevets

# RAPPORT DE RECHERCHE EUROPEENNE

Numéro de la demande

EP 83 40 2005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US-A-4 222 897 (ROLLMANN) * Colonne 3, lignes 39-67; colonne 4, lignes 35-65; colonne 6, lignes 1-25; colonnes 7-8, revendications * --- | 1-4 | B 01 J 20/02<br>B 01 D 53/34<br>C 02 F 1/28 |
| Y | US-A-4 101 631 (AMROSINI) * Colonne 2, ligne 53 - colonne 3, ligne 13; colonne 4, lignes 20-55 * --- | 1,4,5 | |
| Y | CHEMICAL ABSTRACTS, vol. 80, no. 2, 28 janvier 1974, page 286, no. 19024j, Columbus, Ohio, US & RO - A - 54 768 (GRUPUL INDUSTRIAL CHIMIC, RIMNICU-VILCEA) 20-02-1973 * Abrégé * --- | 1,3,4 | **DOMAINES TECHNIQUES RECHERCHES (Int. Cl. 3)** |
| Y | US-A-4 206 183 (YAMADA) * Colonne 4, lignes 8-19; colonne 5, exemple 3 * --- | 1,4 | B 01 J<br>B 01 D |
| A | GB-A-1 126 215 (SINCAT) * Pages 3-4, revendications 1-19 * --- | 1 | |
| A | DE-B-1 075 953 (SIGMA LUTIN) * Colonne 2, lignes 49-53 * ----- | 6 | |

Le présent rapport de recherche a été établi pour toutes les revendications

| Lieu de la recherche | Date d'achèvement de la recherche | Examinateur |
|---|---|---|
| LA HAYE | 24-01-1984 | WENDLING J.P. |

CATEGORIE DES DOCUMENTS CITES

- X : particulièrement pertinent à lui seul
- Y : particulièrement pertinent en combinaison avec un autre document de la même catégorie
- A : arrière-plan technologique
- O : divulgation non-écrite
- P : document intercalaire
- T : théorie ou principe à la base de l'invention
- E : document de brevet antérieur, mais publié à la date de dépôt ou après cette date
- D : cité dans la demande
- L : cité pour d'autres raisons
- & : membre de la même famille, document correspondant

OEB Form 1503. 03.82

BAD ORIGINAL